# EUROPÄISCHE PATENTSCHRIFT

(11) **EP 0 523 310 B1**
(45) Veröffentlichungstag und Bekanntmachung des Hinweises auf die Patenterteilung: **14.06.1995**
(21) Anmeldenummer: 91890153.9
(22) Anmeldetag: 17.07.1991
(51) Int. Cl.: A47B 21/03, F16M 11/04

(54) **Schreibtischaufsatz**
Additional desk support
Support additionnel de bureau

(43) Veröffentlichungstag der Anmeldung: 20.01.1993
(73) Patentinhaber: Ernst Stadelmann Gesellschaft m.b.H., A-4070 Eferding (AT)
(72) Erfinder: Kirchner, Balthasar, A-4070 Eferding (AT); Schleicher, Siegfried, A-4611 Buchkirchen (AT)
(74) Vertreter: Hübscher, Heiner, Dipl.-Ing.

(56) Entgegenhaltungen:
- EP-A- 0 230 236
- US-A- 4 863 140

## Beschreibung

Die Erfindung bezieht sich auf einen Schreibtischaufsatz mit einer über wenigstens zwei Abstandhalter an einem Schreibtisch od. dgl. abstützbaren Tragplatte.

Die zunehmende Bedeutung der technisch-elektronischen Ausrüstung für den modernen Bürobetrieb, angefangen von Telefon-, Telefax- und Diktiergeräten bis hin zu Rechnern, Bildschirmen, Druckern und Kopierern, erfordert immer größere Abstell- und Aufnahmeflächen, wobei aus Platz- und Kostengründen gleichzeitig mit dieser Erfordernis die Notwendigkeit einer Belegungsverdichtung der zur Verfügung stehenden Flächen einhergeht. Die Schreibtische werden daher auch immer häufiger mit einer sogenannten zweiten Arbeitsebene ausgestattet, die mit Abstand oberhalb der eigentlichen Tischplatte zu einer zusätzlichen Ablage und Abstellfläche führt. Um eine solche zweite Arbeitsebene zu erreichen, gibt es Schreibtischaufsätze, die bisher in Form eines festen Aufbaues mit vom Schreibtisch hochgezogenen Rück- und Seitenwänden, Zwischenböden und Abdeckplatten hergestellt sind und vor allem als Ablage für Akten, Formulare, Schreibutensilien u. dgl. dienen, zur Aufnahme von apparativer Büroausrüstung aber weitgehend ungeeignet sind. Dazu kommt noch, daß diese festen Aufbauten keine Möglichkeiten einer Verstellung der vorhandenen Ablagebereiche bieten und keinerlei Positionswahl für die abgestellten Geräte u. dgl. besteht. Die bekannten Schreibtischaufsätze können daher die verschiedenen Ausrüstungsgegenstände nur wenig griff- und bedienungsgerecht aufnehmen und beeinträchtigen zudem das freie Platzangebot der eigentlichen Arbeitsfläche auf der Tischplatte.

Es wurden auch schon spezielle Aufnahmen für Einzelgeräte vorgeschlagen, die schwenkbare Halterungen, wie Telefonschwenkarme u. dgl., umfassen können, doch ist hier die Belastungsfähigkeit dieser Einrichtungen zur Aufnahme größerer oder mehrerer Geräte unzureichend und zur Anordnung den gewünschten Geräten entsprechend vieler solcher Einzelaufnahmen fehlt im Schreibtischbereich einfach der Platz.

Der Erfindung liegt daher die Aufgabe zugrunde, diese Mängel zu beseitigen und einen Schreibtischaufsatz der eingangs geschilderten Art zu schaffen, der sich durch seine Verstellbarkeit, Anpassungsfähigkeit und Belastbarkeit auszeichnet und dadurch zur Aufnahme technisch-elektronischer Ausrüstung bestens geeignet ist.

Die Erfindung löst diese Aufgabe dadurch, daß die Abstandhalter als Schwenkkonsolen ausgebildet sind, die jeweils einen einerseits an einem am Schreibtisch od. dgl. befestigbaren Konsolenfuß und anderseits an der Tragplatte um eine Vertikalachse schwenkbar angelenkten Konsolenarm aufweisen. Diese Schwenkkonsolen, die meist paarweise eingesetzt werden, ergeben für die Tragplatte eine ausgewogene, stabile und dazu noch bewegliche Abstützung, die eine weitgehend freie Verstellung der Tragplatte mit Abstand oberhalb der Tischplatte gewährleistet. Die Tragplatte kann demnach mit verschiedensten Geräten und Ausrüstungsgegenständen bestückt werden und läßt sich dann bedarfsweise in eine für die Bedienung des jeweiligen Gerätes optimale Position bringen. Wunschgemäß kann ein Benützer die Tragplatte zu sich heranziehen oder von sich wegschieben, seitlich wegdrücken usw. und die Bewegungsfreiheit der Tragplatte führt nicht nur zur bequemen Bedienung der auf der Tragplatte abgestellten Geräte, sondern ermöglicht es auch, die eigentliche Schreibtischplatte im wesentlichen ungestört ausnützen zu können. Werden übermäßig große Tragplatten zur Aufnahme größerer Lasten benötigt, ist es möglich, drei oder auch mehr Schwenkkonsolen anzuordnen, wobei dann die Schwenkarme aufeinander abgestimmt sein müssen und die Beweglichkeit der Tragplatte auf ein Parallelverschwenken beschränkt bleibt.

Sind an den Konsolenarmen Stützköpfe vorgesehen, die Schwenklager mit einer gemeinsamen horizontalen Schwenkachse zur schwenkverstellbaren Aufnahme der Tragplatte aufweisen, läßt sich die Tragplatte in ihrer Schräglage einstellen und individuell an den jeweiligen Einsatz anpassen.

Um dabei die Verstellung zu vereinfachen, können die Stützköpfe mit einer eine Stellspindel aufweisenden Stelleinrichtung zur Tragplattenverstellung ausgestattet sein, wobei die mit einem selbsthemmenden Gewindegang versehene Stellspindel, die mit einer entsprechenden Stellmutter od. dgl. zusammenwirkt, ein bequemes, stufenloses Einstellen der Tragplatte und gleichzeitig das Einhalten der jeweils eingenommen Schräglage erlaubt.

Besonders günstig ist es auch, wenn erfindungsgemäß die Tragplatte in lösbar miteinander verbundene Teilplatten unterteilt ist, so daß sich die Tragplatte in ihrer Größe an verschiedene Verhältnisse anpassen läßt und ein solcher Schreibtischaufsatz auch aus einzelnen kleineren Aufnahmeeinheiten zusammengesetzt werden kann. Zur Verbindung der einzelnen Teilplatten genügen Steck- oder Schraubverbindungen oder andere Kupplungselemente, die sich bei festem Zusammenhalt leicht lösen lassen.

Um die Tragplatte in einer bestimmten Position fixieren zu können, ist wenigstens eine Schwenkkonsole mit einer Bremseinrichtung versehen, die es erlaubt, die Tragplattenbewegung schwergängig zu machen oder gar zu blockieren.

Ist die Tragplatte mit Handgriffen, Ablagen, Halterungen od. dgl. Zubehör bestückbar, kommt es zu einer weiteren Bereicherung der Anwendungsmöglichkeiten, zu einer Erleichterung der Handhabung und nicht zuletzt zu einer Vergrößerung des Platzangebotes für eine Geräteaufnahme.

Weist die Tragplatte Laden und/oder Fächer auf, können in unmittelbarer Nähe der Geräte spezielle geräteeigene Kleinteile, Beschreibungen und Anleitungen, aber selbstverständlich auch andere Büroartikel untergebracht werden, ohne die Abstellfläche zu schmälern.

Um den Tischaufsatz mit wenigen Handgriffen montieren, demontieren oder ummontieren zu können, sind die Konsolenfüße mit Klemmeinrichtung, insbesondere Schraubklemmen zur Befestigung an der Tischplatte ausgerüstet. Selbstverständlich ist es aber auch möglich, die Konsolenfüße am Tisch festzuschrauben, und bedarfsweise können die Konsolenfüße sogar Halterungen zur Befestigung an einer Wand bilden, so daß der Schreibtischaufsatz nicht direkt am Schreibtisch sondern an einer benachbarten Wand montierbar ist.

In der Zeichnung ist der Erfindungsgegenstand rein schematisch veranschaulicht, und zwar zeigen
- Fig. 1: ein Ausführungsbeispiel eines erfindungsgemäßen Schreibtischaufsatzes im Schaubild,
- Fig. 2: ein weiteres Ausführungsbeispiel eines erfindungsgemäßen Schreibtischaufsatzes in teilgeschnittener Seitenansicht,
- Fig. 3 und 4: ein anderes Ausführungsbeispiel eines erfindungsgemäßen Schreibtischaufsatzes im Schaubild von schräg oben und schräg unten sowie
- Fig. 5: noch ein anderes Ausführungsbeispiel eines erfindungsgemäßen Schreibtischaufsatzes im Schaubild.

Um für einen nur angedeuteten Schreibtisch 1 eine praktische zweite Arbeitsebene zu erreichen, die sich vor allem zur Aufnahme von technisch-elektronischen Bürogeräten eignet, ist ein Schreibtischaufsatz 2 vorgesehen, der im wesentlichen aus einer über zwei Schwenkkonsolen 3 am Schreibtisch 1 oder einer benachbarten Wand 1a abgestützten Tragplatte 4 besteht. Die Schwenkkonsolen 3 weisen einen Konsolenfuß 5 mit einer Schraubklemme 6 zur lösbaren Befestigung an der Tischplatte oder eine Halterung 6a zur Wandbefestigung und einen Konsolenarm 7 zur Aufnahme der Tragplatte 4 auf. Dieser Konsolenarm 7 ist um Vertikalachsen V schwenkbar einerseits am Konsolenfuß 5 und anderseits an der Tragplatte 4 angelenkt, so daß sich die Tragplatte 4 in verschiedenste Richtungen verschieben und verschwenken läßt und die unterschiedlichsten Positionen eingenommen werden können. Zum Fixieren bestimmter Positionen sind die Konsolenarme 7 mit nur durch einen Betätigungshebel angedeuteten Bremseinrichtungen 8 ausgestattet, die ein zu leichtgängiges oder ungewolltes Bewegen der Tragplatte zu verhindern erlauben.

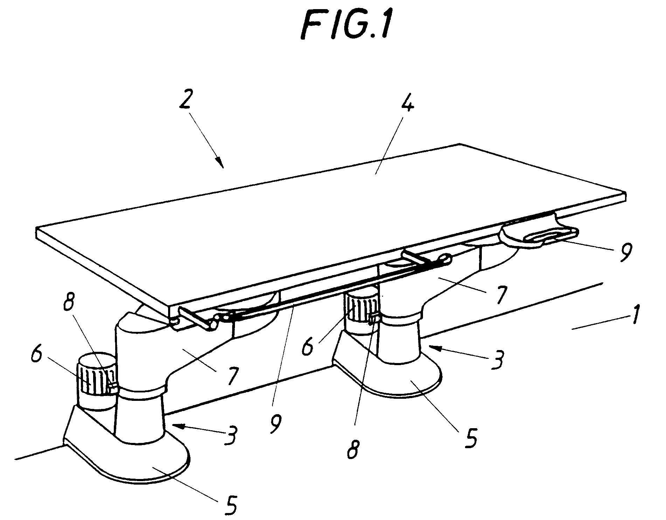

Wie in Fig. 1 angedeutet, kann die Tragplatte 4 mit Handgriffen, zusätzlichen Ablagen und Halterungen od. dgl. Zubehör 9 ausgerüstet sein, um die Handhabung der Tragplatte 4 zu vereinfachen und den Einsatzzweck bzw. das Platzangebot des Aufsatzes 2 zu erweitern.

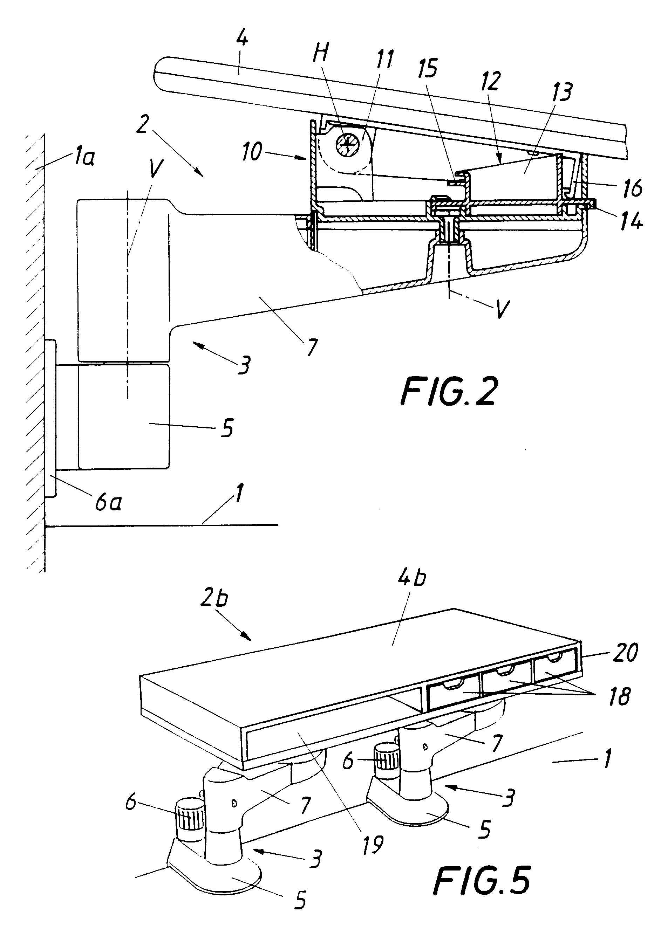

Beim Ausführungsbeispiel nach Fig. 2 sind die Konsolenfüße 5 über Anschlußplatten als Halterungen 6a an einer dem Schreibtisch 1 benachbarten Wand 1a befestigt, um Platz zu gewinnen und den Schreibtisch dirket an die Wand anstellen zu können. An den Konsolenarmen 7 sind Stützköpfe 10 vorgesehen, die ein Schwenklager 11 mit horizontaler Schwenkachse H zur schwenkbaren Aufnahme der Tragplatte 4 aufweisen. Eine Stelleinrichtung 12 erlaubt dabei eine stufenlose Verstellung der Tragplattenschräglage, welche Stelleinrichtung 12 eine Stellspindel 13 besitzt, die über eine Griffscheibe 14 verdrehbar ist und über einen Gewindegang 15 mit einer Stellrippe 16 der Tragplatte 4 zusammenwirkt. Ein Verdrehen der Stellspindel 13 verursacht daher wegen des Entlanggleitens der Stellrippe 16 am Gewindegang 15 ein Aufoder Abschwenken der Tragplatte 4 um das Schwenklager 11, womit die Schräglage der Tischplatte verändert werden kann und beispielsweise ein abgestelltes Gerät durch die entsprechend geneigte Aufstellung besonders leicht bedienbar wird. Der Stützkopf 10 ist um die Vertikalachse V am Konsolenarm 7 drehbar gelagert, so daß die Schrägverstellbarkeit der Tragplatte 4 deren Beweglichkeit parallel zur Tischplatte nicht beeinträchtigt.

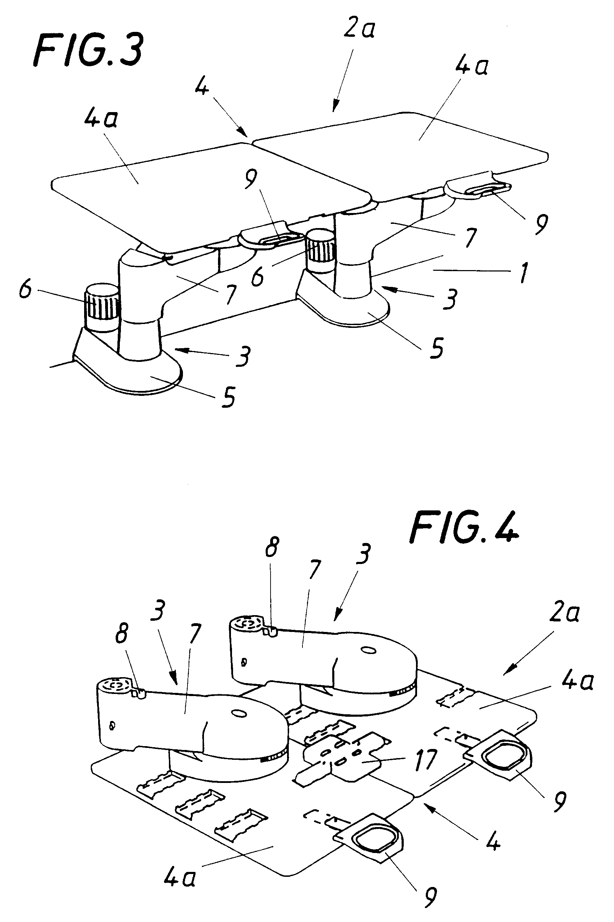

Wie beim Ausführungsbeispiel nach Fig. 3 und 4 veranschaulicht, ist die Tragplatte 4 in zwei Teilplatten 4a unterteilt, welche Teilplatten 4a über Zwischenstücke 17 od. dgl. Verbindungsmittel lösbar miteinander verbunden sind. Jede der Teilplatten 4a sitzt auf einer eigenen Schwenkkonsole 3, so daß sich dieser Tischaufsatz 2a besonders vielfältig verwenden läßt. Es ist beispielsweise möglich, die Tragplatte 4 als Einheit zu benützen, sie aber auch zu teilen und die beiden Teilplatten 4a jeweils separat einzusetzen. Darüber hinaus ist es in nicht weiter dargestellter Weise möglich, die Teilplatten 4a auszuwechseln oder sie mit weiteren Platten zu ergänzen usw..

Gemäß dem Ausführungsbeispiel nach Fig. 5 ist der Schreibtischaufsatz 2b mit Laden 18 oder Fächern 19 ausgestattet, welche Laden oder Fächer in einem kastenförmigen Aufbau 20 untergebracht sind, deren Oberfläche die Tragplatte 4b bildet.

Der erfindungsgemäße Schreibtischaufsatz ist auf Grund der zwei- oder mehrfachen Tragplattenabstützung durch die Schwenkkonsolen ausreichend belastbar, um beliebige Bürogeräte aufnehmen zu können, und bietet darüber hinaus durch die Beweglichkeit der Schwenkkonsolen eine bequeme Möglichkeit, die auf der Tragplatte abgestellten Geräte mit einem Griff in die Reichweite eines Benutzers zu bringen oder sie nach einer Benützung in eine den üblichen Arbeitsplatz am Schreibtisch nicht beeinträchtigende Warteposition zu schieben. Der Schreibtischaufsatz erlaubt es, die erste Arbeitsebene eines Schreibtisches weitgehend ungestört zur Verfügung zu haben und die zweite Arbeitsebene bedarfsweise in die günstigste Benützungsposition zu bringen.

## Patentansprüche

1. Schreibtischaufsatz (2) mit einer über wenigstens zwei Abstandhalter (3) an einem Schreibtisch (1) od. dgl. abstützbaren Tragplatte (4), dadurch gekennzeichnet, daß die Abstandhalter als Schwenkkonsolen (3) ausgebildet sind, die jeweils einen einerseits an einem am Schreibtisch (1) od. dgl. befestigbaren Konsolenfuß (5) und anderseits an der Tragplatte (4) um eine Vertikalachse (V) schwenkbar angelenkten Konsolenarm (7) aufweisen.

2. Schreibtischaufsatz nach Anspruch 1, dadurch gekennzeichnet, daß an den Konsolenarmen (7) Stützköpfe (10) vorgesehen sind, die Schwenklager (11) mit einer gemeinsamen horizontalen Schwenkachse (H) zur schwenkverstellbaren Aufnahme der Tragplatte (4) aufweisen.

3. Schreibtischaufsatz nach Anspruch 2, dadurch gekennzeichnet, daß die Stützköpfe (10) mit einer eine Stellspindel (13) aufweisenden Stelleinrichtung (12) zur Tragplattenverstellung ausgestattet sind.

4. Schreibtischaufsatz nach einem der Ansprüche 1 - 3, dadurch gekennzeichnet, daß die Tragplatte (4) in lösbar miteinander verbundene Teilplatten (4a) unterteilt ist.

5. Schreibtischaufsatz nach einem der Ansprüche 1 - 4, dadurch gekennzeichnet, daß wenigstens eine Schwenkkonsole (3) mit einer Bremseinrichtung (8) versehen ist.

6. Schreibtischaufsatz nach einem der Ansprüche 1 - 5, dadurch gekennzeichnet, daß die Tragplatte (4) mit Handgriffen, Ablagen, Halterungen u. dgl. Zubehör (9) bestückbar ist.

7. Schreibtischaufsatz nach einem der Ansprüche 1 - 6, dadurch gekennzeichnet, daß die Tragplatte (4) Laden (18) und/oder Fächer (19) aufweist.

8. Schreibtischaufsatz nach einem der Ansprüche 1 - 7, dadurch gekennzeichnet, daß die Konsolenfüße (5) mit Klemmeinrichtungen, insbesondere Schraubklemmen (6) zur Befestigung an der Tischplatte ausgerüstet sind.

9. Schreibtischaufsatz nach einem der Ansprüche 1 - 7, dadurch gekennzeichnet, daß die Konsolenfüße Halterungen (6a) zur Befestigung an einer Wand (1a) bilden.

## Claims

1. A desk attachment (2) having a shelf (4) supportable on a desk (1) or the like by means of at least two spacers (3), characterised in that the spacers are in the form of pivoting brackets (3), each comprising a bracket arm (7) articulated for pivoting about a vertical axis (V), on the one hand on a bracket foot (5) adapted to be secured to the desk (1) or the like, and on the other hand on the shelf (4).

2. A desk attachment according to claim 1, characterised in that supporting heads (10) are provided on the bracket arms (7) and comprise pivot bearings (11) having a common horizontal pivot axis (H) for pivotable support of the shelf (4).

3. A desk attachment according to claim 2, characterised in that the supporting heads (10) are equipped with an adjustment means (12) comprising an adjustment spindle (13) for adjustment of the shelf.

4. A desk attachment according to any one of claims 1 to 3, characterised in that the shelf (4) is divided into releasably interconnected parts (4a).

5. A desk attachment according to any one of claims 1 to 4, characterised in that at least one pivoting bracket (3) is provided with a braking means (8).

6. A desk attachment according to any one of claims 1 to 5, characterised in that the shelf (4) can be fitted with handles, pigeonholes, holders and similar accessories (9).

7. A desk attachment according to any one of claims 1 to 6, characterised in that the shelf (4) has drawers (18) and/or compartments (19).

8. A desk attachment according to any one of claims 1 to 7, characterised in that the bracket feet (5) are provided with clamping means, more particularly screw clamps (6), for fixing on the desk top.

9. A desk attachment according to any one of claims 1 to 7, characterised in that the bracket feet form mounts (6a) for fixing to a wall (1a).

## Revendications

1. Garniture de table d'écriture (2), avec une plaque support (4) pouvant être soutenue par l'intermédiaire d'au moins deux supports d'écartement (3), sur une table d'écriture (1) ou analogue,
caractérisée par le fait que les supports d'écartement sont réalisés sous forme de consoles pivotantes (3), présentant chacune un pied de console (5) pouvant, d'une part, être fixé sur la table d'écriture (1) ou analogue et présentant, d'autre part, un bras de console (7) articulé de façon à pouvoir pivoter, sur la plaque support (4), autour d'un axe vertical (V).

2. Garniture de table d'écriture selon la revèndication 1,
caractérisée par le fait que, sur les bras de consoles (7), sont prévues des têtes d'appui (10), présentant des paliers de pivotement (11) avec un axe de pivotement (H) horizontal commun, destiné à supporter la plaque support (4) en permettant un réglage par pivotement.

3. Garniture de table d'écriture selon la revendication 2,
caractérisée par le fait que les têtes d'appui (10) sont équipées d'un dispositif de réglage (12) présentant une broche de réglage (13), en vue de permettre le réglage de la plaque support.

4. Garniture de table d'écriture selon l'une des revendications 1 à 3,
caractérisée par le fait que la plaque support (4) est subdivisée en des plaques partielles (4a) reliées ensemble de façon amovible.

5. Garniture de table d'écriture selon l'une des revendications 1 à 4,
caractérisée par le fait qu'au moins une console pivotante (3) est pourvue d'un dispositif de freinage (8).

6. Garniture de table d'écriture selon l'une des revendications 1 à 5,
caractérisée par le fait que la plaque support (4) peut être équipée de poignées déposoirs, fixations ou accessoires analogues.

7. Garniture de table d'écriture selon l'une des revendications 1 à 6,
caractérisée par le fait que la plaque support (4) comporte des magasins (18) et/ou des compartiments (19).

8. Garniture de table d'écriture selon l'une des revendications 1 à 7,
caractérisée par le fait que les pieds de console (5) sont équipés de dispositifs de serrage, en particulier de pinces à vissage (6), pour assurer la fixation sur la plaque de table.

9. Garniture de table d'écriture selon l'une des revendications 1 à 7,
caractérisée par le fait que les pieds de console constituent des supports (6a) pour assurer la fixation à un mur (1a).
